# EUROPEAN PATENT APPLICATION

(11) **EP 4 611 276 A1**
(43) Date of publication of application: **03.09.2025**
(21) Application number: 24275015.6
(22) Date of filing: 27.02.2024
(51) Int. Cl.: H04B 7/185, H04W 84/06

(54) **METHOD OF AND SYSTEM FOR SCHEDULING TRANSMISSION OF DATA**

(71) Applicant: ARINC Incorporated, Annapolis, MD 21401 (US)
(72) Inventor: FIRYAGUNA, Fadhil, T12K68P Cork (IE); LIN, Chih-Kuang, D15HD4C Dublin (IE)
(74) Representative: Dehns

(57) **Abstract**

A method of scheduling transmission of a data packet between a selected base station of a cellular network to an aircraft within a particular time period. The method includes:
(a) retrieving information about the scheduled location of the aircraft;
(b) selecting a base station using the retrieved information about the scheduled location of the aircraft;
(c) retrieving information about transmissions that are scheduled in the cellular network;
(d) for a transmission of the data packet having at least one proposed characteristic:
(i) calculating an interference level of the transmission of the data packet having at least one proposed characteristic with the transmissions that are scheduled in the cellular network; and
(ii) when the interference level of the transmission of the data packet is less than a particular threshold, identifying the at least one proposed characteristic as potential characteristic(s) with which to transmit the data packet.

## Description

### Technical Field

This disclosure relates to a method of and system for scheduling information exchange in a cellular network. In particular, this disclosure related to a method of and system for scheduling information exchange between a base station of a cellular network and an aircraft.

### Background Art

Cellular networks are widely used for communication between mobile devices. Cellular networks also present a number of attractive qualities for use in aerospace communications. For example, cellular networks may provide direct air-to-ground datalinks and private networks in the cabin.

However, high altitude wireless communication may introduce more interference than terrestrial communication. Interference may affect the quality and reliability of transmissions. It may be particularly important to ensure that any communications are reliable and of good quality in aerospace applications to ensure that safety requirements are met.

Furthermore, aircraft typically travel over larger distances and at a faster speed than other forms of transport. As the aircraft frequently moves through various cells of the network, it may be desirable to ensure that an aircraft is able to communicate with an appropriate base station of a cellular network for various points of its journey.

### Summary of the Disclosure

According to a first aspect of the present disclosure, there is provided a method of scheduling transmission of a data packet from a selected base station of a cellular network to an aircraft within a particular time period or from an aircraft to a selected base station of a cellular network within a particular time period;
wherein the cellular network comprises a plurality of base stations;
wherein the method comprises the steps of:
   (a) retrieving information about the scheduled location of the aircraft within the particular time period;
   (b) selecting a base station from the plurality of base stations, using the retrieved information about the scheduled location of the aircraft;
   (c) retrieving information about transmissions that are scheduled in the cellular network within the particular time period;
   (d) for transmission of the data packet, wherein the transmission has at least one proposed characteristic:
      (i) calculating an interference level of the transmission of the data packet having the at least one proposed characteristic with the transmissions that are scheduled in the cellular network within the particular time period; and
      (ii) when the interference level of the transmission of the data packet having the at least one proposed characteristic is less than a particular threshold, identifying the at least one proposed characteristic as potential characteristic(s) which to transmit the data packet.

The method of the present disclosure relates to scheduling transmissions to take place in the future. Scheduling a transmission may comprise selecting one or more characteristic(s) with which to transmit the data packet between a base station in the cellular network and an aircraft.

The cellular network may be any suitable and desired type. The cellular network comprises a plurality of base stations. The base stations may be any suitable and desired type. The base stations may all be of the same type or at least some of the base stations may be of different types.

The base stations may each be in a fixed location on the ground. The base stations may be any distance apart. In some examples, the base stations are typically spaced apart from one another by more than 100 km, optionally more than 150 km, optionally more than 200 km.

The base stations may each be configured to transmit and/or receive data packets at any suitable and desired frequency. In some examples, each of the plurality of base stations may be configured to transmit and/or receive data packets at substantially the same frequency or at a different frequency.

In some examples, the steps of the method relate to base stations and aircraft within a region of interest of the cellular network. A region of interest of the cellular network may be any suitable and desired size and may be selected as the region of interest for any reason. For example, a region of interest may relate to a particular airspace (e.g. the airspace of a particular country or jurisdiction). A region of interest may relate to a certain area or radius around a particular base station or set of base stations. A region of interest may relate to a particular network carrier.

The data packet to be transmitted may be any suitable and desired type. In some examples, the size and/or format of the data packet may be determined by requirements and/or standards of the cellular network. The data to be transmitted may be any suitable and desired information. For example, the data to be transmitted may relate to the aircraft itself (e.g. tracking or monitoring information relating to the aircraft) and/or information to be used within the aircraft (e.g. to provide internet service for passengers on board the aircraft).

The at least one proposed characteristic(s) of the transmission may be any suitable and desired type. The proposed characteristic(s) may have an effect on how the transmission interferes with other transmission that are scheduled in the cellular network. Therefore, the proposed characteristic(s) may be selected such that interference is reduced or minimised.

The aircraft may be any suitable and desired type. In some examples, the aircraft may be an aircraft configured to carry passengers such as an airplane or a helicopter. The aircraft may be configured to transmit and/or receive data packets via the cellular network. Thus, the aircraft may be configured to transmit and/or receive information at substantially the same frequencies as one or more base stations of the cellular network.

The aircraft of the method may be located within (e.g. flying through) the region of interest of the cellular network. When the aircraft is within the region of interest of the cellular network, this may indicate that the aircraft is within range of one of more base stations of the cellular network (e.g. such that transmission and/or receipt of a data packet may be scheduled from a base station to the aircraft).

The particular time period may be a window of time in which the transmission is scheduled to take place. The particular time period may be a period of time in the future (e.g. a period of time that elapses after the steps of the method have been carried out). In some examples, the particular time period commences from the completion of the scheduling process. In some examples, particular time period may be approximately one day, optionally approximately a few hours, optionally approximately one hour, optionally approximately 30 minutes, optionally approximately 10 minutes, optionally approximately 5 minutes, optionally approximately 1 minute.

In some examples, it may be advantageous for the particular period of time to be short because variables within the system are subject to change. For example, the route of the aircraft could change or another aircraft could come into the range of the base station. By only scheduling transmissions within a short predetermined period of time, this avoids wasting resources scheduling transmissions that later need to be updated. However, it will be understood that the time taken to transmit the data packet from the base station to the aircraft may be substantially shorter than the particular period of time.

The aircraft of the method may be located within the region of interest of the cellular network. The aircraft of the method may be scheduled or otherwise predicted to be within the region of interest of the cellular network at a future time (e.g. within the predetermined time period commencing from completion of the scheduling). When the aircraft is within the region of interest of the cellular network, this may indicate that the aircraft is within range of one of more base stations of the cellular network (e.g. such that transmission and/or receipt of a data packet may be scheduled between a base station and the aircraft).

The method includes the step (a) of retrieving information about the scheduled location of the aircraft within the particular time period. When the particular time period is a period of time in the future (e.g. a period of time that elapses after the steps of the method have been completed), the location of the aircraft may be a scheduled location (e.g. according to the flight path of the aircraft) or an otherwise predicted location of the aircraft. The location of the aircraft may be predicted in any suitable and desired manner.

The information may be retrieved from any suitable and desired source. For example, the information may be retrieved from a database comprising aircraft and/or flight data (e.g. from a publicly available database). In some examples, the information may be retrieved from the aircraft or from an operator of the aircraft. The information retrieved may comprise information on the location of the aircraft throughout the particular time period, or it may only include information for a time within the particular time period. For example, the scheduled location may only be known at certain (e.g. regular) intervals (e.g. once per minute) within the particular time period.

In some examples, the information about the scheduled location of the aircraft comprises a flight path (of the aircraft). The flight path may be any suitable and desired type. In some examples, the flight path comprises a set of coordinates for the route of the aircraft during the flight, optionally including the corresponding times for each coordinate. In some examples, the coordinates may include a latitude, a longitude and/or an altitude. In some examples, the flight path may be a standard route (e.g. a usual path, such as a flight corridor, between a particular departure location and a particular arrival location). In some examples, the flight path may be particular to each aircraft (e.g. taking into account factors such as weather conditions during that particular flight).

The method includes the step (b) of selecting a base station from the plurality of base stations, using the retrieved information about the scheduled location of the aircraft. Any suitable and desired method may be used to select the base station.

In some examples, the step (b) of selecting a base station may comprise retrieving information about one or more of the plurality of base stations of the cellular network. The information may comprise one or more of: the location, the link budget propagation loss, the transmit power, the cable loss, the type of base station, the directivity gain, the beam tilt, and the beam orientation of one or more of the plurality of base stations in the cellular network.

In some examples, selecting the base station comprises determining the distance between the plurality of the base stations and the scheduled location of the aircraft, and selecting the base station that is closest to the scheduled location of the aircraft. This may be suitable for cellular networks with a high density of base stations, as it may be possible to determine without further calculation that the closest base station is within a suitable range for transmitting the data packet to the aircraft.

In some examples, selecting a base station from the plurality of base stations comprises:
calculating the power of the transmission of the data packet between one or more of the plurality of base stations of the cellular network and the aircraft.

The power of the transmission may be calculated between any number of base station and aircraft pairs. In some examples, the power of the transmission may be calculated between each of the base stations within a region of interest (e.g. within a particular radius of the scheduled location of the aircraft) and the aircraft.

The power of the transmission may be one or more of: the power of the transmission when it is generated by the base station; the power of the transmission at a particular coordinate (e.g. a coordinate at which the transmission interferes with another transmission); and the power of the transmission at the scheduled location of the aircraft. Any or all of these power calculations may be used to select a base station from the plurality of base stations of the cellular network.

In some examples, the power of the transmission is the power of the transmission at the location where the transmission is received. When the transmission of a data packet is from a selected base station of a cellular network to an aircraft, the power of the transmission may be the power received at the aircraft. When the transmission of a data packet is from an aircraft to a selected base station of a cellular network, the power of the transmission may be the power received at the base station. Calculating the power of the transmission in this way may help to ensure that the power of the transmission at the location of its receipt is sufficient to successfully deliver the data packet.

In some examples, selecting a base station from the plurality of base station further comprises:
determining whether the power of the transmission of the data packet between a base station of the cellular network and the aircraft is above a power threshold; and
selecting the base station when the power of the transmission of the data packet between the base station and the aircraft is above the power threshold.

The power threshold may be any suitable and desired value. In some examples, the power threshold may represent a value that is required for the data packet to be transmitted between a base station and an aircraft. That is, the power threshold may represent the power that is required to ensure that the data packet arrives (and is received) at the aircraft successfully.

In some examples, the power threshold may (e.g. additionally or alternatively) represent a signal to noise ratio. The signal to noise ratio threshold may represent a value that is required for the data packet to be transmitted between a base station and an aircraft without any loss of information. Selecting a base station that is capable of transmitting a data packet with the desired signal to noise ratio may help to ensure that the data is transmitted in whole and that the signal can be successfully read at the aircraft.

In some examples, calculating the power of the transmission of the data packet between one or more of the plurality of base stations of the cellular network and an aircraft comprises retrieving information about one or more of the plurality of base stations in the cellular network;
wherein the information comprises one or more of: the location, the propagation loss, the transmit power, the cable loss, the type of base station, the directivity gain, the beam tilt, and the beam orientation of one or more of the plurality of base stations in the cellular network.

The information may be retrieved from any suitable and desired source. In some examples, the information may be retrieved from a controller of the system. In some examples, the information may be retrieved from one or more of the base stations of the cellular network and/or from an operator of the cellular network.

The information may be used in any suitable and desired manner to calculate the power of the transmissions.

In some examples, a plurality of base stations may be identified as being suitable for selecting as the base station. For example, a plurality of base stations may be within a suitable range for transmitting a data packet to the aircraft. In these examples, the most preferable base station may be selected as the base station for transmitting the data packet to the aircraft.

The method includes the step (c) of retrieving information about transmissions that are scheduled in the cellular network within the particular time period. The information may be retrieved from any suitable and desired source. In some examples, the information may be retrieved from a controller of the system. In some examples, the information may be retrieved from the aircraft, the base station and/or from an operator of the aircraft or the base station.

The transmissions may be scheduled between any of the base stations of the cellular network and any aircraft. The transmission may be scheduled at any time within the particular time period.

Of particular interest may be transmissions that are scheduled between other base stations of the cellular network (i.e. base stations that are not the selected base station) and other aircraft (i.e. aircraft other than the one for which a transmission is currently being scheduled as part of the method). These transmissions may be of particular interest because they have the potential to interfere with the transmission being scheduled between the selected base station and the aircraft of the present method.

In examples where the method is for scheduling transmission of a data packet from a selected base station of a cellular network to an aircraft within a particular time period, the transmissions may be scheduled from others of the plurality of base stations of the cellular network to (e.g. other) aircraft.

In examples where the method is for scheduling transmission of a data packet from an aircraft to a selected base station of a cellular network within a particular time period, the transmissions may be scheduled from (e.g. other) aircraft to others of the plurality of base stations in the cellular network.

In some examples, the information about the transmissions that are scheduled in the cellular network within the particular time period comprises one or more of: the time of the scheduled transmissions, the frequency of the scheduled transmissions, the base station that is scheduled to make or receive the transmissions, the aircraft that is scheduled to make or receive the transmissions, and the power of the transmissions.

In some examples, the at least one proposed characteristic of the transmission comprises at least one of:
a proposed frequency of the transmission;
a proposed time of the transmission;
a proposed code-division of the transmission; and
a proposed spatial-division of the transmission.

In some examples, the proposed characteristic comprises a proposed frequency of the transmission (i.e. the frequency at which the transmission is made). The frequency of the transmission may affect how the transmission interferes with others of the transmissions within the cellular network. Therefore, the frequency of the transmission may be selected in order to reduce or eliminate interference. In some examples, available frequencies may be proposed according to the capability and/or availability at the aircraft and/or at the base station. In some examples, each transmitter (i.e. each base station and/or each aircraft) (e.g. within a certain area of the cellular network) may be assigned a different frequency.

In some examples, the proposed characteristic comprises a proposed time of the transmission (i.e. the time at which the transmission is made). The time of the transmission may affect how the transmission interferes with others of the transmissions within the cellular network. Therefore, the time of the transmission may be selected in order to reduce or eliminate interference. In some examples, available transmission times may be proposed according to the capability and/or availability at the aircraft and/or at the base station. In some examples, each transmitter (i.e. each base station and/or each aircraft) (e.g. within a certain area of the cellular network) may be assigned a different transmission time.

In some examples, the proposed characteristic comprises a proposed code-division of the transmission. In some examples, each transmitter (i.e. the base station or the aircraft) is assigned a code with which to send the data packet. The code that is selected may affect how the transmission interferes with others of the transmissions within the cellular network. Therefore, the code may be selected in order to reduce or eliminate interference. In some examples, each transmitter (i.e. each base station and/or each aircraft) (e.g. within a certain area of the cellular network) may be assigned a different code.

In some examples, the proposed characteristic comprises a proposed spatial-division of the transmission. In some examples, the transmitter (i.e. the aircraft or the base station) may be configured such that it is possible to transmit the data packet in a focussed beam having a particular direction (instead of e.g. radially outwards in substantially all directions). The direction that is selected may affect how the transmission interferes with others of the transmissions within the cellular network. Therefore, the direction may be selected in order to reduce or eliminate interference. In some examples, each transmitter (i.e. each base station and/or each aircraft) (e.g. within a certain area of the cellular network) may be assigned a different direction.

Any suitable and desired number and combination of proposed characteristics may be selected. In some examples, selecting more than one proposed characteristic may help to ensure that interference can be reduced while maintaining a greater proportion of the available bandwidth in the cellular network.

For example, if the proposed characteristic comprises both a proposed time and a proposed frequency, it may be possible to schedule other transmissions in the network at the same time or at the same frequency without causing additional interference, as long as the same combination of time and frequency are not used.

In some examples, the at least one proposed characteristic comprises a first proposed characteristic and a second proposed characteristic.

In some examples, the first proposed characteristic and the second proposed characteristic are different characteristics.

For example, the first proposed characteristic may be the proposed frequency of the transmission and the second proposed characteristic may be the proposed time of the transmission.

The method includes the step (d)(i) of, for a transmission of the data packet, wherein the transmission has at least one proposed characteristic, calculating an interference level of the transmission of the data packet having the at least one proposed characteristic with the transmissions that are scheduled in the cellular network within the particular time period.

The calculation of step (d)(i) may be performed in any suitable and desired manner. The interference may be calculated for the transmission as a whole or at a particular point in the cellular network. For example, the interference may be calculated at the location at which the transmission is received (e.g. the location of the base station or the scheduled location of the aircraft).

The interference level may be represented by any suitable and desired parameter. For example, the interference level may be represented by the signal to noise ratio of the signal, the fidelity of the signal, the amount of data lost or corrupted during transmission, or any other suitable value.

In some examples, calculating an interference level of the transmission of the data packet having the at least one proposed characteristic with the transmissions that are scheduled in the cellular network within the particular time period comprises calculating the power of the transmissions.

The power of the transmission may be calculated between any number of base station and aircraft pairs. The calculation may consider any number of scheduled transmissions and therefore any number of base station and aircraft pairs. In some examples, the calculation may be restricted to base station and aircraft pairs within a certain region of interest (e.g. within a particular radius of the selected base station).

In some examples, the power of the transmission is the power of the transmission at the location where the transmission is received. When the transmission of a data packet is from a selected base station of a cellular network to an aircraft, the power of the transmission may be the power received at the aircraft. When the transmission of a data packet is from an aircraft to a selected base station of a cellular network, the power of the transmission may be the power received at the base station. Calculating the power of the transmission in this way may help to ensure that the power of the transmission at the location of its receipt is sufficient to successfully deliver the data packet.

In some examples, calculating the power of the transmissions comprises retrieving information about one or more of the plurality of base stations in the cellular network;
wherein the information comprises one or more of: the location, the propagation loss, the transmit power, the cable loss, the type of base station, the directivity gain, the beam tilt, and the beam orientation of one or more of the plurality of base stations in the cellular network.

The information may be retrieved from any suitable and desired source. In some examples, the information may be retrieved from a controller of the system. In some examples, the information may be retrieved from one or more of the base stations of the cellular network and/or from an operator of the cellular network.

In some examples, the power of transmissions in the cellular network may be precalculated such that no calculation is required to determine the power of the transmissions.

The information may be used in any suitable and desired manner to calculate the interference of the transmissions.

The method includes the step (d)(ii) of, for a transmission of the data packet, wherein the transmission has at least one proposed characteristic, when the interference level of the transmission of the data packet having the at least one proposed characteristic is less than a particular threshold, identifying the at least one proposed characteristic as potential characteristic(s) with which to transmit the data packet.

In some examples, the particular threshold is determined by:
simulating the cellular network; and
determining a value of the particular threshold based on the simulated performance of the network.

In some examples, simulating the cellular network comprises selecting particular variables to model the cellular network. The particular variables may comprise one or more of: the location of the base stations; the type of base stations; the location of the aircraft; the power transmitted by (e.g. each of) the scheduled transmissions in the cellular network; the particular threshold; and the performance of the network.

In some examples, determining a value of the particular threshold comprises performing a multivariate linear regression on one or more of the selected variables. The multivariate linear regression may be configured to predict the performance of the network when different particular thresholds are used. It may be possible to identify the value of the particular threshold based on the results of the multivariate linear regression by selecting the particular threshold for which the performance of the network is tuned (e.g. to a particular level of performance) (e.g. maximised).

The performance of the network may be represented by any suitable and desired parameter. For example, the performance of the network may be represented by one or more of: the bandwidth; the (e.g. average) signal-to-noise ratio of the transmissions; the power consumption; and the fidelity of the data packets being transmitted.

In some examples, the particular threshold is dependent on one or more of: the type of selected base station, the distance between the selected base station and others of the plurality of base stations in the cellular network, and the density of aircraft in the cellular network.

In some examples, the particular threshold is dependent on the type of selected base station. For example, a different threshold may be used when the base station transmitting the data packet has a down-titled antenna compared to when the base station transmitting the data packet has an up-titled antenna. In particular, a higher threshold may be used when the base station transmitting the data packet has a down-titled antenna compared to when the base station transmitting the data packet has an up-titled antenna. For transmission of a given power at the base station, a down-tilted antenna may direct a lower proportion of that energy upwards towards an aircraft, so a higher threshold may be used to determine whether interference will occur compared to an up-titled antenna, which will direct a greater proportion of the energy upwards towards the aircraft.

In some examples, the particular threshold is dependent on the distance between the selected base station and others of the plurality of base stations in the cellular network. In particular, a higher threshold may be used when the adjacent base stations are further apart compared to when adjacent base stations are closer together. For transmission of a given power at the base station, a lower proportion of that energy will reach the point of interference with an adjacent base station, so a higher threshold may be used to determine whether interference will occur compared to base stations which are closer together, where a greater proportion of the transmitted energy will remain at the interference point.

In some examples, the method further comprises the step of:
(e) determining whether the transmission having the potential characteristic(s) is available for scheduling transmission of the data packet from the selected base station.

In some examples, the transmission having the potential characteristic(s) is unavailable when there is already a transmission having the potential characteristic(s) scheduled from the selected base. It may not be desirable to transmit two data packets from the same base station if both transmissions have the same potential characteristic(s), as this may contribute to interference between the transmissions. For example, it may not be desirable to transmit two data packets from the same base station at the same time and/or at the same frequency, as these transmissions may interfere.

In some examples, the transmission having the potential characteristic(s) is unavailable when others of the plurality of base stations in the cellular network are scheduled to transmit a data packet with a transmission having the potential characteristic(s).

This may be referred to as the transmission being 'muted'. Preventing the selected base station from scheduling a transmission that is muted may help to ensure that the transmission does not interfere with transmissions that are already scheduled.

In some examples, transmissions may only be muted by base stations within a particular region of interest of the selected base station (e.g. within a particular radius of the selected base station). These transmissions may be more likely to cause interference and/or become subject to interference.

Transmissions may be muted by any suitable and desired means. In some examples, a central controller may be configured to record information about the scheduled transmissions (e.g. the selected base station, the selected aircraft, the characteristic(s) of the transmission) that can be referred to when further transmissions are being scheduled and used to block certain transmissions being scheduled. In some examples, the base stations may communicate directly to mute transmissions at another base station (e.g. as a distributed control system).

In some examples, the method further comprises the step of:
(f) when the transmission having the potential characteristic(s) is available for scheduling transmission of the data packet from the selected base station, identifying the potential characteristic(s) as the selected characteristic(s) and scheduling the transmission of the data packet with the selected characteristic(s).

A transmission may be considered to be scheduled when it is determined that the transmission of the data packet will take place with the selected characteristic(s) and that no other potential characteristic(s) are to be considered for transmitting that particular data packet.

In some examples, when a transmission is scheduled having the selected characteristic(s), other base stations (e.g. within a particular range of the selected base station) are prevented from scheduling transmissions having that selected characteristic(s). This may be referred to as 'muting' a transmission at another base station. This may help to ensure that no further transmissions are scheduled that would interfere with transmissions that have already been scheduled. For example, if the selected characteristics are a selected time and selected frequency for the transmission, other base stations (e.g. within a particular range of the selected base station) may be prevented from scheduling transmissions at that selected time and selected frequency.

Transmissions may be muted by any suitable and desired means. In some examples, a central controller may be configured to record information about the scheduled transmissions (e.g. the selected base station, the selected aircraft, the selected characteristic(s)) that can be referred to when further transmissions are being scheduled and used to block certain transmissions being scheduled. In some examples, the base stations may communicate directly to mute transmissions at another base station (e.g. as a distributed control system).

In some examples, the method further comprises the step of:
(g) determining whether the transmission having the potential characteristic(s) at which to transmit the data packet is available for scheduling receipt of the data packet at the selected base station.

In some examples, the transmission having the potential characteristic(s) is unavailable when there is already receipt of a transmission having the potential characteristic(s) scheduled at the selected base station at the potential time or at the potential frequency. It may not be desirable to receive two data packets at the selected base station having the same potential characteristic(s), as this may contribute to interference between the transmissions.

In some examples, the transmission having the potential characteristic(s) is unavailable when others of the plurality of base stations in the cellular network are scheduled to receive a data packet with a transmission having the potential characteristic(s).

This may be referred to as a transmission being 'muted'. Preventing the selected base station from receiving a transmission that is muted may help to ensure that the transmission does not interfere with transmissions that are already scheduled.

In some examples, transmissions may only be muted by base stations within a particular region of interest of the selected base station (e.g. within a particular radius of the selected base station). These transmissions may be more likely to cause interference and/or become subject to interference.

Transmissions may be muted by any suitable and desired means. In some examples, a central controller may be configured to record information about the scheduled transmissions (e.g. the selected base station, the selected aircraft, the characteristic(s) of the transmission) that can be referred to when further transmissions are being scheduled and used to block certain transmissions being scheduled. In some examples, the base stations may communicate directly to mute transmissions at another base station (e.g. as a distributed control system).

In some examples, the method further comprises the step of:
(h) when the transmission having the potential characteristic(s) is available for receiving transmission of the data packet from the selected aircraft, identifying the potential characteristic(s) as the selected characteristic(s) and scheduling the transmission of the data packet with the selected characteristic(s).

A transmission may be considered to be scheduled when it is determined that the transmission of the data packet will take place with the selected characteristic(s) and that no other potential characteristic(s) are to be considered for transmitting that particular data packet.

In some examples, when a transmission is scheduled having the selected characteristic(s), other base stations (e.g. within a particular range of the selected base station) are prevented from scheduling transmissions having that selected characteristic(s). This may be referred to as 'muting' a transmission at another base station. This may help to ensure that no further transmissions are scheduled that would interfere with transmissions that have already been scheduled. For example, if the selected characteristics are a selected time and selected frequency for the transmission, other base stations (e.g. within a particular range of the selected base station) may be prevented from scheduling transmissions at that selected time and selected frequency.

Transmissions may be muted by any suitable and desired means. In some examples, a central controller may be configured to record information about the scheduled transmissions (e.g. the selected base station, the selected aircraft, the selected characteristic(s)) that can be referred to when further transmissions are being scheduled and used to block certain transmissions being scheduled. In some examples, the base stations may communicate directly to mute transmissions at another base station (e.g. as a distributed control system).

In some examples, the cellular network is a 5G cellular network. In some examples, using a 5G cellular network may be particularly advantageous because it may provide direct air-to-ground and ground-to-air transmission of data packets. Furthermore, a 5G network may be configured to provide private 5G networks in the cabin. In comparison with some previous generations of cellular networks, the use of 5G technology may increase the network capacity and efficiency of data transmission to and from aircraft owing to its high bandwidth availability, configuration flexibility, and reliability.

In some examples, the method may be repeated to schedule further transmissions within the cellular network. For example, the method may be repeated with a different selected base station, a different aircraft and/or a different proposed characteristic(s) for transmission of the data packet.

For example, after a first transmission having a first value of a selected characteristic has been scheduled, the steps of the method may be repeated for a second (or further) transmission having a second value of a selected characteristic.

In some examples, if at step (e) it is determined that the transmission having the potential characteristic(s) is unavailable, certain steps of the method may be repeated. This may help to ensure a suitable base station and a suitable characteristic(s) is determined for transmitting or receiving the data packet.

In some examples, the steps of the method may be repeated until transmissions have been scheduled (e.g. for a certain aircraft and/or a certain base station) for substantially the entire duration of the particular time period. Therefore, the method of the present disclosure may result in a schedule for each base station and/or each aircraft which determines its transmission (having particular characteristic(s)) for the particular time period. In some examples, a schedule may be produced for substantially all of the base stations and all of the aircraft within a region of interest for the particular time period.

Using the method in this manner may help to ensure that transmissions within a cellular network are scheduled in advance (i.e. for a particular time period in the future), thereby ensuring in advance that the scheduled transmissions do not interfere with one another.

In some examples, certain steps of the method may be repeated if there are changes in the system. For example, certain steps of the method may be repeated if the scheduled location of the aircraft changes (e.g. due to a diversion of the aircraft or a change in weather conditions). Certain steps of the method may be repeated if a new aircraft enters the region of interest of the cellular network. This may help to ensure that transmission are scheduled to and/or from this aircraft and that these transmissions are considered when scheduling other transmissions within the cellular network.

In some examples, certain steps of the method may be repeated at regular intervals. For example, the method may be repeated for a further predetermined time period that commences when the current predetermined time period elapses.

This may help to ensure that transmissions are continuously scheduled for a particular period of time in advance of the current time.

According to a second aspect of the present disclosure, there is provided a system for scheduling transmission of a data packet from a selected base station of a cellular network to an aircraft within a particular time period and/or for scheduling transmission of a data packet from an aircraft to a selected base station of a cellular network within a particular time period;
wherein the cellular network comprises a plurality of base stations; and
wherein the system comprises a controller configured to carry out the steps of:
   (a) retrieving information about the scheduled location of the aircraft within the particular time period;
   (b) selecting a base station from the plurality of base stations, using the retrieved information about the scheduled location of the aircraft;
   (c) retrieving information about transmissions that are scheduled in the cellular network within the particular time period;
   (d) for a transmission of the data packet, wherein the transmission has at least one proposed characteristic:
      (i) calculating an interference level of the transmission of the data packet having the at least one proposed characteristic with the transmissions that are scheduled in the cellular network within the particular time period; and
      (ii) when the interference level of the transmission of the data packet having the at least one proposed characteristic is less than a particular threshold, identifying the at least one proposed characteristic as potential characteristic(s) with which to transmit the data packet.

The features discussed in relation to the first aspect of the present disclosure apply equally to the second aspect of the present disclosure.

The controller may be any suitable and desired type. For example, the controller may be a central controller or a distributed controller. The controller may be local to other parts of the cellular network or the controller may be remote (e.g. forming part of a cloud computer).

In some examples, the controller is configured to communicate with (e.g. each of) the plurality of base stations of the cellular network and/or with the aircraft. The controller may communicate with (e.g. each of) the plurality of base stations of the cellular network and/or with the aircraft in any suitable and desired way.

The controller may be configured to receive information from (e.g. each of) the plurality of base stations of the cellular network and/or from the aircraft at any point during the process of scheduling transmissions. In particular, the controller may receive information at steps (a) and (c) above.

The controller may be configured to send information to (e.g. each of) the plurality of base stations of the cellular network and/or from the aircraft at any point during the process of scheduling transmissions. In particular, the controller may send information when a selected characteristic(s) for the transmission has been determined, where applicable.

### Brief Description of the Drawings

Certain examples of the present disclosure will now be described with reference to the accompanying drawings in which:
Figure 1 is a flow chart of a method of scheduling transmission of a data packet from a selected base station of a cellular network to an aircraft or from an aircraft to a selected base station of a cellular network, within a particular time period;
Figure 2 is a flow chart showing steps of a method of scheduling transmission of a data packet from a selected base station of a cellular network to an aircraft within a particular time period;
Figure 3 is a schematic diagram showing transmission of a data packet being scheduled from base stations of a cellular network to aircraft;
Figures 4a and 4b are schematic diagrams showing the scheduled transmissions from two base stations of a cellular network;
Figure 5 is a flow chart showing steps of a method of scheduling transmission of a data packet from an aircraft to a selected base station of a cellular network within a particular time period;
Figure 6 is a schematic diagram showing transmission of a data packet being scheduled from aircraft to base stations of a cellular network; and
Figure 7 is a schematic diagram showing a system for scheduling transmission of a data packet from a selected base station of a cellular network to an aircraft within a particular time period and/or for scheduling transmission of a data packet from an aircraft to a selected base station of a cellular network within a particular time period.

### Detailed Description

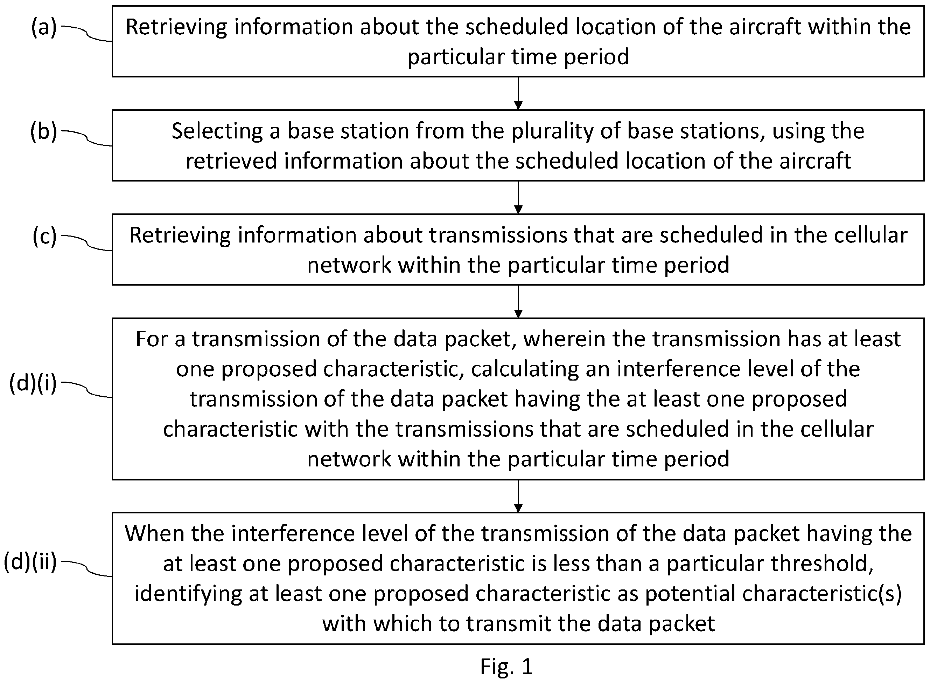

Figure 1 is a flow chart of a method of scheduling transmission of a data packet from a selected base station of a cellular network to an aircraft within a particular time period or from an aircraft to a selected base station of a cellular network within a particular time period.

According to the method of Figure 1, the cellular network comprises a plurality of base stations. The method comprises the steps of:
(a) retrieving information about the scheduled location of the aircraft within the particular time period;
(b) selecting a base station from the plurality of base stations, using the retrieved information about the scheduled location of the aircraft;
(c) retrieving information about transmissions that are scheduled in the cellular network within the particular time period;
(d) for transmission of the data packet, wherein the transmission has at least one proposed characteristic:
   (i) calculating an interference level of the transmission of the data packet having the at least one proposed characteristic with the transmissions that are scheduled in the cellular network within the particular time period; and
   (ii) when the interference level of the transmission of the data packet having the at least one proposed characteristic is less than a particular threshold, identifying the at least one proposed characteristic as potential characteristic(s) with which to transmit the data packet.

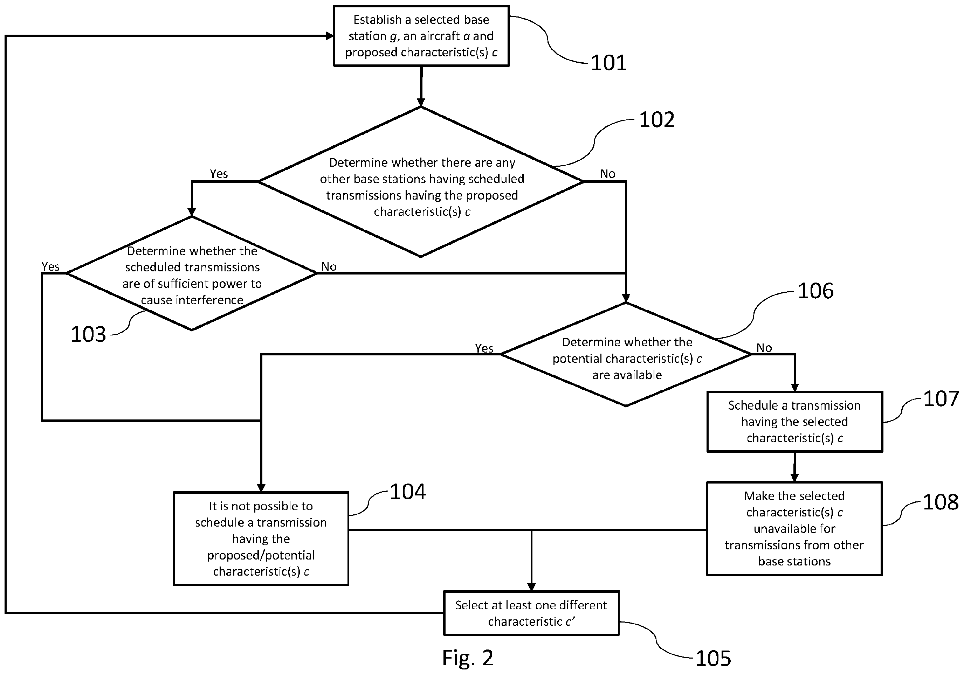

Figure 2 is a flow chart showing certain steps of a method of scheduling transmission of a data packet from a selected base station of a cellular network to an aircraft within a particular time period.

The method of Figure 2 may start at a point corresponding to step (d)(i) of the method of Figure 1.

The method begins at step 101. At step 101, the parameters of the method are established. In particular, a selected base station g, an aircraft a and at least one proposed characteristic c are established. Any or all of these variables may be selected based on any steps of the present disclosure (e.g. steps (a) - (c) of the method described herein).

The method proceeds to step 102, where it is determined whether there are any other base stations having scheduled transmissions having the proposed characteristic(s) c. In some examples, only base stations within a particular region of interest are considered (referred to as the `interfering neighbourhood'). For example, an `interfering neighbourhood' may be a particular radius of the selected base station, as any other base stations within this radius may have the highest likelihood of interference with the selected base station.

If there are other base stations having scheduled transmissions having the proposed characteristic(s), it is then determined at step 103 whether the scheduled transmissions are of sufficient power to cause interference. If the power being exchanged is sufficiently low, the scheduled transmissions may cause a low level of interference that is likely not to substantially affect the quality of the proposed transmission from the selected base station.

In some examples, determining whether the scheduled transmissions are of sufficient power to cause interference includes comparing the power of one or more of the transmissions to a threshold value, in accordance with one or more steps of the present disclosure.

If it is determined that the scheduled transmissions are likely to cause interference with the proposed transmissions from the selected base station, then it is determined at step 104 that it is not possible to schedule a transmission having the proposed characteristic(s). In this example, the method proceeds to step 105, whereby at least one different characteristic c' is selected. The method then returns to step 101.

If it is determined (at step 102) that there are no other base stations with scheduled transmissions, or that the scheduled transmissions are unlikely to cause interference (at step 103), the proposed characteristic(s) is identified as potential characteristic(s) which to transmit the data packet. The method proceeds to step 106.

At step 106, it is determined whether the potential characteristic(s) with which to transmit the data packet is available for scheduling transmission of the data packet from the selected base station. In this example, the potential characteristic(s) is unavailable when others of the plurality of base stations in the cellular network are scheduled to transmit a data packet with a transmission having the potential characteristic(s).

In some examples, a resource may be unavailable when a base station within a particular region is scheduled to transmit a data packet with a transmission having the potential characteristic(s). For example, the particular region may be a particular radius around the selected base station, as these may have the highest likelihood of interference with the first base station.

If it is determined that the potential characteristic(s) is unavailable, then the method proceeds to step 104 where it is determined that it is not possible to schedule transmission of a data packet from the selected base station with a transmission having the potential characteristic(s). In this example, the method proceeds to step 105, whereby at least one different characteristic c' is selected. The method then returns to step 101.

If it is determined that the potential characteristic(s) are available, the potential characteristic(s) is confirmed as the selected characteristic(s) with which to transmit the data packet. The method proceeds to step 107 in which the transmission having the selected characteristic(s) from the selected base station is scheduled.

In this example, the method proceeds to step 108 whereby the selected characteristic(s) is then made unavailable for transmission from other base stations. This may help to ensure that no further transmission are scheduled from other base stations that may interfere with the transmission that has just been scheduled from the selected base station.

In this example, the method proceeds to step 105, whereby a at least one different characteristic c' is selected. The method then returns to step 101.

The steps of the method described in relation to Figure 2 may be repeated as suitable and desired. For example, the method may be repeated with different proposed characteristics until all desired transmissions have been schedule from the selected base station. In some examples, the steps of the method may be repeated with a different selected base station and/or a different aircraft.

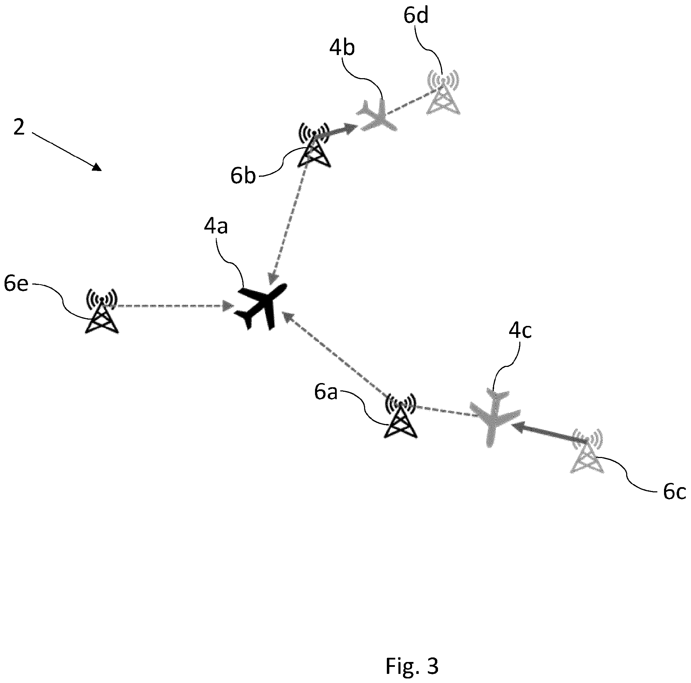

Figure 3 is a schematic diagram showing transmission of a data packet being scheduled from base stations of a cellular network to aircraft. In this example, the cellular network comprises five base stations 6a-e. There are three aircraft 4a-c in the region of the cellular network.

In this example, it is being determined whether the base station 6a could transmit a data packet to aircraft 4a with a transmission having at least one proposed characteristic c.

It is determined that transmissions from the base stations 6b and 6e could potentially interfere with transmissions from the base station 6a.

In this example, the base station 6b is scheduled to transmit a data packet to the aircraft 4b with a transmission having at least one characteristic *c*. This transmission could interfere with the proposed transmission from the base station 6a. Thus, it is determined that the base station 6a cannot transmit a data packet to aircraft 4a with a transmission having at least one characteristic *c*.

Furthermore, in this example, the base station 6c is scheduled to transmit a data packet to the aircraft 4c with a transmission having at least one characteristic *c*. If the proposed transmission were to be made from the base station 6a, this could interfere with the transmission that is already scheduled from the base station 6c. Therefore, the characteristic(s) *c* are determined to be unavailable at the base station 6a.

The transmissions that have already been scheduled from base stations 6c and 6b also lead to further transmissions being unavailable in the cellular network. In particular, the transmission that is scheduled from base station 6b results in the characteristic(s) c being deemed unavailable at the base station 6d. If such a transmission were to be made from the base station 6d, this could interfere with the transmission that is already scheduled from the base station 6b.

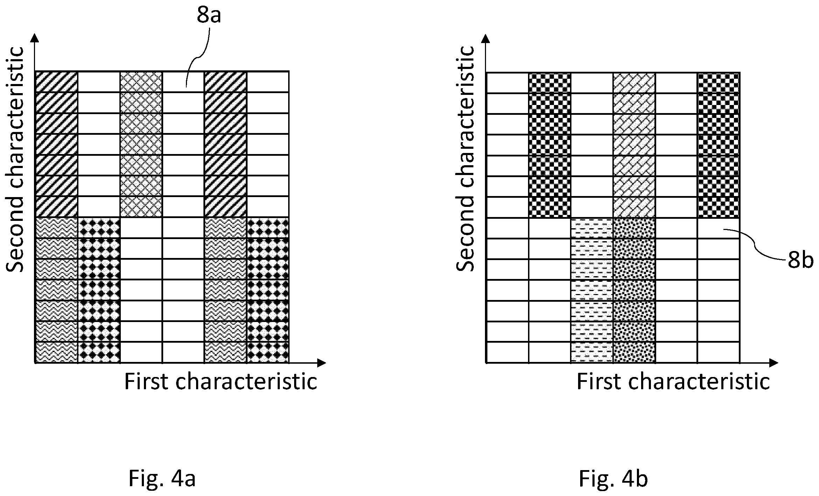

Figures 4a and 4b are schematic diagrams showing the scheduled transmissions from two base stations of a cellular network. Figure 4a is a schematic diagram showing the scheduled transmissions from a first base station of a cellular network and Figure 4b is a schematic diagram showing the scheduled transmissions from a second base station of the same cellular network. The schedules of Figures 4a and 4b may be produced by a method in accordance with the present disclosure.

The schedules of Figures 4a and 4b each extend over a first characteristic on the x-axis and a second characteristic on the y-axis. The first and second characteristics are divided into discrete blocks 8a, 8b (only one shown on each figure for clarity). Each block 8a, 8b represents a combination of a proposed first characteristic and a proposed second characteristic to be used to transmit a data packet.

Shaded blocks are blocks that have been selected for which a transmission has been scheduled (e.g. according to the method of the present disclosure).

It can be seen that when a block is shaded in Figure 4a, the corresponding block is not shaded in Figure 4b. Similarly, when a block is shaded in Figure 4b, the corresponding block is not shaded in Figure 4a. In this example, transmissions having the same combination of selected first characteristic and selected second characteristic are not scheduled from both the first base station and the second base station. This may help to ensure that the transmissions from the different base stations do not interfere with one another. This may help to ensure that the data packets are transmitted to the aircraft without any information loss and/or any information damage.

In some examples, it may be possible to schedule transmissions having the same combination of selected first characteristic and selected second characteristic from different base stations without causing interference. For example, this may be possible if the selected base stations are sufficiently far apart from one another and/or if the transmissions are of sufficiently low power.

In Figures 4a and 4b, the different shading of the scheduled transmissions represents the different aircraft for which the transmission is scheduled. Each base station may be scheduled to transmit data packets to a number of different aircraft. This may be desirable because the aircraft may move through the cells quickly and may only connect to any particular base station for a short period of time. Furthermore, in some locations there is a high density of aircraft and using a single base station to transmit information to a number of aircraft helps to ensure that a greater number of aircraft are able to communication through the cellular network.

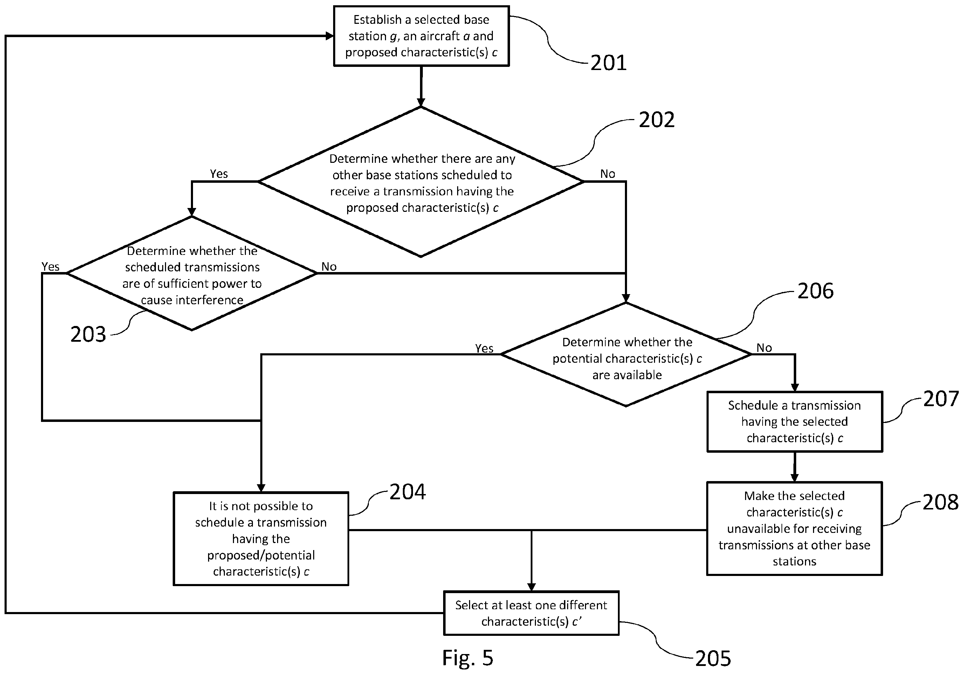

Figure 5 is a flow chart showing certain steps of a method of scheduling transmission of a data packet from an aircraft to a selected base station of a cellular network within a particular time period.

The steps of the method of Figure 5 correspond to those of Figure 2 (e.g. step 101 of Figure 2 corresponds to step 201 of Figure 2). The features of the method described in relation to Figure 2 apply equally to the method of Figure 5.

However, in step 202 of Figure 5, it is determined whether there are any other base stations that are scheduled to receive a transmission having the proposed characteristic(s). In the corresponding step 102 in Figure 2, it is determined whether there are any other base stations having scheduled transmissions having the proposed characteristic(s).

Similarly, at step 208, the selected characteristic is made unavailable for other base stations to receive transmissions.

Therefore, a difference between the two methods is that only transmissions in the corresponding direction to the transmission being scheduled (e.g. transmission from the base station or receipt at the base station) are checked for potential interference at step 102 or step 202 or made unavailable for other base stations at step 108 or 208.

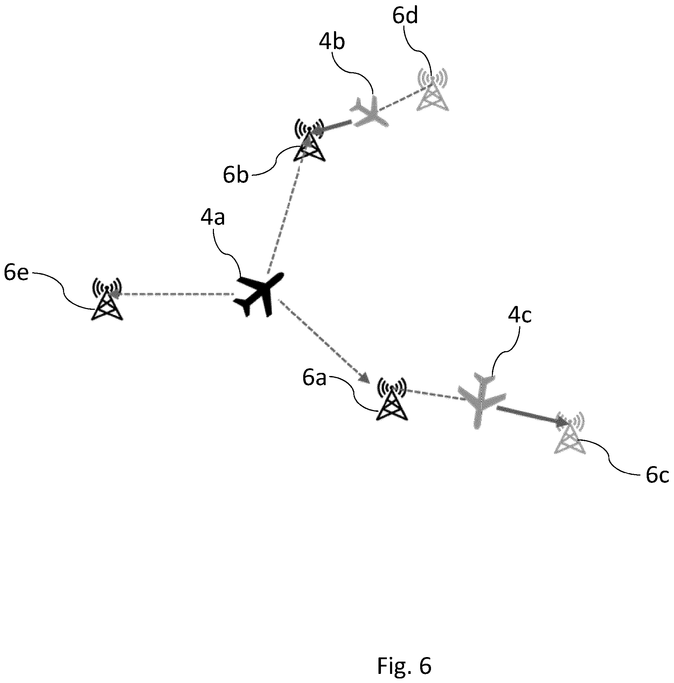

Figure 6 is a schematic diagram showing transmission of a data packet being scheduled from aircraft to base stations of a cellular network. In this example, the cellular network comprises five base stations 6a-e. There are three aircraft 4a-c in the region of the cellular network.

In this example, it is being determined whether the aircraft 4a could transmit a data packet to the base station 6a with a transmission having at least one proposed characteristic c.

It is determined that transmissions to the base stations 6b and 6e could potentially interfere with transmissions to the base station 6a.

In this example, the base station 6b is scheduled to receive a data packet from the aircraft 4b with a transmission having at least one characteristic c. This transmission could interfere with the proposed transmission to the base station 6a. Thus, it is determined that the base station 6a cannot receive a data packet from the aircraft 4a with a transmission having at least one characteristic c.

Furthermore, in this example, the base station 6c is scheduled to receive a data packet from the aircraft 4c with a transmission having at least one characteristic c. If the proposed transmission were to be made to the base station 6a, this could interfere with the transmission that is already scheduled to the base station 6c. Therefore, the characteristic(s) c are determined to be unavailable at the base station 6a.

The transmissions that have already been scheduled to base stations 6c and 6b also lead to further transmissions being unavailable in the cellular network. In particular, the transmission that is scheduled to base station 6b results in the characteristic(s) c being deemed unavailable at the base station 6d. If such a transmission were to be made to the base station 6d, this could interfere with the transmission that is already scheduled to the base station 6b.

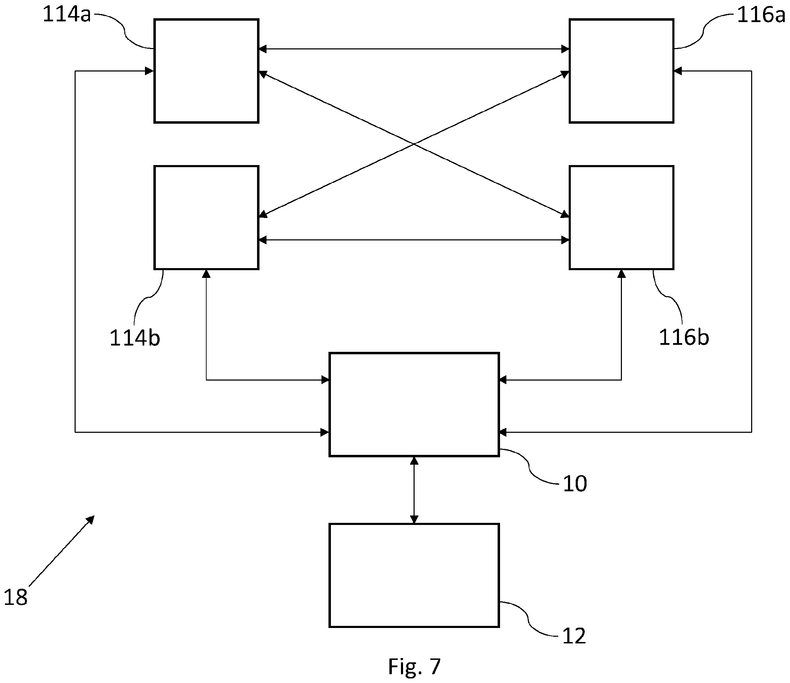

Figure 7 is a schematic diagram showing a system for scheduling transmission of a data packet from a selected base station of a cellular network to an aircraft within a particular time period and/or for scheduling transmission of a data packet from an aircraft to a selected base station of a cellular network within a particular time period.

In this example, the system 18 includes a controller 10, a memory 12, a plurality of base stations 114a, 114b and a plurality of aircraft 116a, 116b. In this example, only two base stations 114a, 114b and two aircraft 116a, 116b have been shown for simplicity. However, it will be understood that the system 18 may include any number of base stations and any number of aircraft.

In this example, each of the base stations 114a, 114b is configured to transmit data packets to and receive data packets from each of the aircraft 116a, 116b. Similarly, each aircraft 116a, 116b is configured to transmit data packets to and receive data packets from each of the base stations 114a, 114b. However, it will be understood that in some examples, not all of the base stations may be configured to exchange data packets with all of the aircraft. For example, the distance between some pairs of base stations and aircraft may be too large for data packets to be exchanged.

Each of the base stations 114a, 114b and each aircraft 116a, 116b is in communication with the controller 10. Each of the base stations 114a, 114b and each aircraft 116a, 116b may send information to or receive information from the controller 10. In some examples, the information received from the controller 10 may include one or more of: instructions to transmit or receive a data packet (e.g. with a transmission having at least one selected characteristic), the content of the data packet to be transmitted, and a request to send information to the central controller. In some examples, the information sent to the controller 10 may include one or more of: information about the base station or the aircraft, information about scheduled transmissions, and data to be stored on the memory 12.

In this example, the controller 10 may be a central controller. However, the controller 10 may be any suitable and desired type. For example, the controller 10 may be a distributed controller that is implemented across the components of the system 18.

In this example, the controller 10 is in communication with a memory 12. The memory 12 may be configured to store information about the system 18 and the scheduled transmissions of the system 18. In some examples, the memory 12 forms part of the controller 10. In this example, the base stations 114a, 114b and the aircraft 116a, 116b are in communication with the memory 12 via the controller 10. In some examples, the base stations 114a, 114b and/or the aircraft 116a, 116b may be in direct communication with the memory 12 (e.g. in addition or alternatively to the communication via the controller 10).

The method of the present disclosure, in at least some examples, advantageously exploits the fact that the route of an aircraft is known in advance to schedule transmissions between a base station of a cellular network and an aircraft. By using the scheduled route of the aircraft, the base station to transmit or receive the information, one or more characteristics of the transmission may be chosen to ensure that interference is reduced or prevented entirely. This may help to increase the quality of the transmissions (i.e. by ensuring that information is not destroyed or corrupted by interference). This may be particularly important in aerospace as some of the information being transmitted may be safety critical in certain applications of the present method.

## Claims

1. A method of scheduling transmission of a data packet from a selected base station of a cellular network to an aircraft within a particular time period or from an aircraft to a selected base station of a cellular network within a particular time period;
wherein the cellular network comprises a plurality of base stations;
wherein the method comprises the steps of:
(a) retrieving information about the scheduled location of the aircraft within the particular time period;
(b) selecting a base station from the plurality of base stations, using the retrieved information about the scheduled location of the aircraft;
(c) retrieving information about transmissions that are scheduled in the cellular network within the particular time period;
(d) for a transmission of the data packet, wherein the transmission has at least one proposed characteristic:
(i) calculating an interference level of the transmission of the data packet having the at least one proposed characteristic with the transmissions that are scheduled in the cellular network within the particular time period; and
(ii) when the interference level of the transmission of the data packet having the at least one proposed characteristic is less than a particular threshold, identifying the at least one proposed characteristic as potential characteristic(s) with which to transmit the data packet.

2. The method as claimed in claim 1, wherein the information about the scheduled location of the aircraft comprises a flight path.

3. The method as claimed in claim 1 or 2, wherein selecting a base station from the plurality of base stations comprises:
calculating the power of the transmission of the data packet between one or more of the plurality of base stations of the cellular network and the aircraft.

4. The method as claimed in claim 3, wherein selecting a base station from the plurality of base station further comprises:
determining whether the power of the transmission of the data packet between a base station of the cellular network and the aircraft is above a power threshold; and
selecting the base station when the power of the transmission of the data packet between the base station and the aircraft is above the power threshold.

5. The method as claimed in any one of the preceding claims, wherein the information about the transmissions that are scheduled in the cellular network within the particular time period comprises one or more of: the time of the scheduled transmissions, the frequency of the scheduled transmissions, the base station that is scheduled to make or receive the transmissions, the aircraft that is scheduled to make or receive the transmissions, and the power of the transmissions.

6. The method as claimed in any one of the preceding claims, wherein the at least one proposed characteristic of the transmission comprises at least one of:
a proposed frequency of the transmission;
a proposed time of the transmission;
a proposed code-division of the transmission; or
a proposed spatial-division of the transmission.

7. The method as claimed in any one of the preceding claims, wherein the at least one proposed characteristic comprises a first proposed characteristic and a second proposed characteristic, wherein optionally the first proposed characteristic and the second proposed characteristic are different characteristics.

8. The method as claimed in any one of the preceding claims, wherein calculating an interference level of the transmission of the data packet having the at least one proposed characteristic with the transmissions that are scheduled in the cellular network within the particular time period comprises calculating the power of the transmissions.

9. The method as claimed in any one of the preceding claims, wherein the particular threshold is determined by:
simulating the cellular network; and
determining a value of the particular threshold based on the simulated performance of the network.

10. The method as claimed in any one of the preceding claims, wherein the particular threshold is dependent on one or more of: the type of selected base station, the distance between the selected base station and others of the plurality of base stations in the cellular network, and the density of aircraft in the cellular network.

11. The method as claimed in any one of the preceding claims, wherein the method further comprises the step of:
(e) determining whether the transmission having the potential characteristic(s) is available for scheduling transmission of the data packet from the selected base station.

12. The method as claimed in claim 11, wherein the method further comprises the step of:
(f) when the transmission having the potential characteristic(s) is available for scheduling transmission of the data packet from the selected base station, identifying the potential characteristic(s) as the selected characteristic(s) and scheduling the transmission of the data packet with the selected characteristic(s).

13. The method as claimed in any one of claims 1 to 10, wherein the method further comprises the step of:
(g) determining whether the transmission having the potential characteristic(s) at which to transmit the data packet is available for scheduling receipt of the data packet at the selected base station.

14. The method as claimed in claim 13, wherein the method further comprises the step of:
(h) when the transmission having the potential characteristic(s) is available for receiving transmission of the data packet from the selected aircraft, identifying the potential characteristic(s) as the selected characteristic(s) and scheduling the transmission of the data packet with the selected characteristic(s).

15. A system for scheduling transmission of a data packet from a selected base station of a cellular network to an aircraft within a particular time period and/or for scheduling transmission of a data packet from an aircraft to a selected base station of a cellular network within a particular time period;
wherein the cellular network comprises a plurality of base stations; and
wherein the system comprises a controller configured to carry out the steps of:
(a) retrieving information about the scheduled location of the aircraft within the particular time period;
(b) selecting a base station from the plurality of base stations, using the retrieved information about the scheduled location of the aircraft;
(c) retrieving information about transmissions that are scheduled in the cellular network within the particular time period;
(d) for a transmission of the data packet, wherein the transmission has at least one proposed characteristic:
(i) calculating an interference level of the transmission of the data packet having the at least one proposed characteristic with the transmissions that are scheduled in the cellular network within the particular time period; and
(ii) when the interference level of the transmission of the data packet having the at least one proposed characteristic is less than a particular threshold, identifying the at least one proposed characteristic as potential characteristic(s) with which to transmit the data packet.
